# EUROPEAN PATENT APPLICATION

(11) **EP 1 307 058 A1**
(43) Date of publication of application: **02.05.2003**
(21) Application number: 01125199.8
(22) Date of filing: 24.10.2001
(51) Int. Cl.: H04Q 7/22, H04J 3/16

(54) **System and methods for telecommunications**

(71) Applicant: Telefonaktiebolaget L M Ericsson (Publ), 126 25 Stockholm (SE)
(72) Inventor: Charas, Philippe, SE-19478 Upplands Väsby (SE)
(74) Representative: Mohsler, Gabriele

(57) **Abstract**

The invention relates to a telecommunications system that can be controlled in a simpler manner than existing telecommunications systems, while capable of offering the same services. The system comprises at least one node that is connected to at least two communication links, and at least one access point. The communication links comprise communication resources for communication among nodes and between nodes and access points. These communication resources are assigned to subscribers. The invention further relates to a method for controlling the system, system components and methods for controlling said system components.

## Description

### Field of invention

The invention relates to a system for telecommunication and methods for controlling said system.

### Description of prior art

Nowadays, telecommunications is increasing in importance and figures. The number of subscribers is higher from year to year as well as the number of connections and information transmitted. Mobile telecommunications in particular is increasing on a very fast pace.
The requirements at telecommunication equipment, especially on network side, are more and more key for the success of telecommunication system operators. For the time being, network components are getting more complex and the number of different nodes increases, both in order to provide mobility as well as a number of different services. By this, the processing capacity of network nodes and inter node signalling become limiting factors for the overall performance of a network.

David Isenberg suggests a more simple network in his article "Rise of the Stupid Network", published in ACM Networker 2.1, February 1998. In this article Isenberg describes, on a very abstract level, a way to reduce the complexity of a network by offering more bandwidth than necessary. The system shall be controlled by the data sent in it.

However, Isenberg does not describe architecture of such a system.

### Summary of the invention

It is therefore object of the invention to define a system with simple nodes and a simple structure.

This is achieved by the system of claim 1, the methods of claims 11, 13, and 16, the edge node of claim 12, the node of claim 17, the access point of claim 15, the terminal of claim 18, and the software of claims 18 to 21.

Advantageous is that communication resources are not assigned to a connection or a call but to a subscriber. By this, the handling of resources is much less complicated and network resources can be implemented in a very simple way.

Also advantageous is the filtering of data packets by the edge node. By this, the transmission of data packets can be restricted to certain, well defined, areas in the system.

Further advantageous is the duplicating and broad casting of packets by the node. This enables to have the same contents in a defined area of the network. This simplifies the architecture of a node and enables to concentrate functions in the system. For example, any node that is connected to further nodes can perform legal interception of a communication of a subscriber. Another advantage is the simple implementation of paging and broadcasting services.

Further advantageous is the filtering of data packets by an access point. This is especially reasonable in the case that the access point is connected via an air interface to a subscriber. The access point allows the advantages of broadcasting in the system while at the same time saves rare resources on the air interface.

Further advantageous embodiments can be derived from the claims 2 to 10.

Advantageous is the storing of the correlation between resources and a subscriber in a central instance of the system as the authentication instance according to claim 2. This allows allocating resources to a subscriber in a simple way. In the case that the relation is stored in the authentication instance, the authentication and the allocating can be performed in a single step.

Further advantageous is the storing of resources allocated to a subscriber in a terminal of said subscriber. This enables to use resources assigned to a subscriber as soon as the subscriber attaches to the system.

Also advantageous is the defining of a hierarchy within the system according to claim 3. By this, it is possible to define an uplink and a downlink direction in the system..

Further advantageous is the definition of a hierarchy for communication links according to claim 4. This simplifies the handling of data packets by edge nodes to a large extent.

Especially advantageous is that assigning of a communication resource of the highest level of the system to a subscriber according to claim 5. Highest level resources can be mapped to any other communication resource in the system.

Further advantageous is the allocating of resources from a first communication link to a second communication link by a node according to claim 6. Resource related switching is much simpler than a call set up with a connection oriented switching afterwards.

Advantageous is the one to one allocating or mirroring of resources according to claim 7. This is the simplest way of allocating resources on communication links to each other.

Further advantageous is the edge node of claim 8 that stores an identification of terminals in its service area and exclusively allocates communication resources for said terminals. This edge node saves communication resources and is adapted to intersect the system.

Advantageous is the use of at least one uniform protocol for signalling between the system and an access point according to claim 9. This enables to set up a system that is independent from protocols used on an interface between an access point and a terminal or an in between network and the access point.

Also advantageous is the use of at least one uniform protocol for exchanging payload between the system and an access point according to claim 10. This enables to set up a system that is independent from protocols used on an interface between an access point and a terminal or an in between network and the access point.

Further advantageous is the method of claim 14, wherein the decisions whether to send a data packet on a first link and the decision whether to send a data packet on a second link can be influenced by operator settings. By this, an operator can decide whether he prefers to save bandwidth or if the prefers a larger availability of data packets.

The basic idea of the invention is to reduce the complexity of telecommunication systems on the cost of bandwidth. Bandwidth has become cheap with the introduction of optical wave-guides and is available to a large extent.

The invented system consists of a plurality of communication links and nodes.

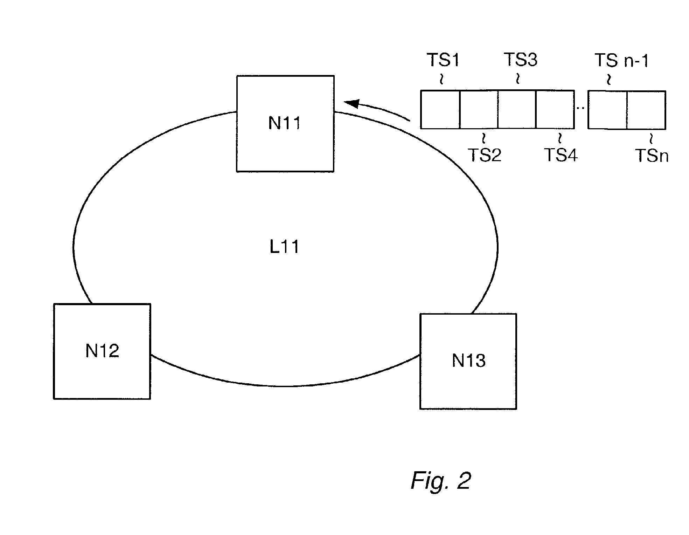

One of the main differences between the invented system and existing systems is that communication resources are assigned to subscribers instead of, as for example in GSM (Global System for Mobile communication), to a connection. Communication resources will be described in more detail by figure 2.

Communication resources are assigned to a subscriber for example when he gets a subscription, when he attaches to an access point or when he requests a connection.

### Brief description of the drawings

The following figures show:
- Fig. 1:: depicts a telecommunications system according to the invention,
- Fig. 1a:: depicts a preferred embodiment of a telecommunications system according to the invention,
- Fig. 2:: depicts a communication structure in a telecommunications system,
- Fig. 3:: depicts a handling of data packets according to the invention as performed by a node,
- Fig. 4:: depicts a handling of data packets according to the invention as performed by an edge node,
- Fig. 5:: depicts an alternative handling of data packets according to the invention as performed by an edge node,
- Fig. 6:: depicts a handling of data packets according to the invention as performed by an access point,
- Fig. 7:: depicts an alternative handling of data packets according to the invention as performed by an access point.

### Detailed description of embodiments

In the following the invention is described in more detail by means of embodiments and figures. Equal reference signs indicate equal elements.

A communication link is a network element connecting two elements that are one of a node, an edge node or an access point. Communication links can be implemented by any means with sufficient bandwidth, as for example coaxial cables, microwave links, optical fibres and alike. Communication links comprise communication resources

Communication resources are means for transmitting data. These means can be for example a certain bandwidth of a frequency spectrum, a number of time slots, a code, a spreading factor or any other means depending on the multiplexing method used on the communication link.

A communication structure is a set of communication links, wherein each of the communication links transmits the same payload, not necessarily at the same time on in the same order as the other communication links. For simplicity reasons, the communication structures are depicted as rings in the figures although any topology, as, for example, a bus, a star or a meshed topology can implement a communication structure.

An access point is giving a terminal access to the telecommunications system. An access point may be a node of a network for mobile telecommunication, a plug for a fixed phone or an ad hoc network that is connected to the telecommunications system. An access point uses at least one uniform protocol for signalling toward the system and at least one uniform protocol for transmitting payload. This guarantees that the system is independent from protocols used between access points and terminals, so that the system can provide services independent of access methods.

A subscriber is someone who owns a subscription. Said subscription may be a handled by at least one operator of a telecommunication system as invented. It may as well be a subscription to an operator having an agreement with the at least one operator, for example an operator of a system that is connected to the invented system or a subscription broker.

The system is designed for transmitting data packets. These data packets may comprise signalling information or payload. The data packets are transported in communication resources of a communication link.

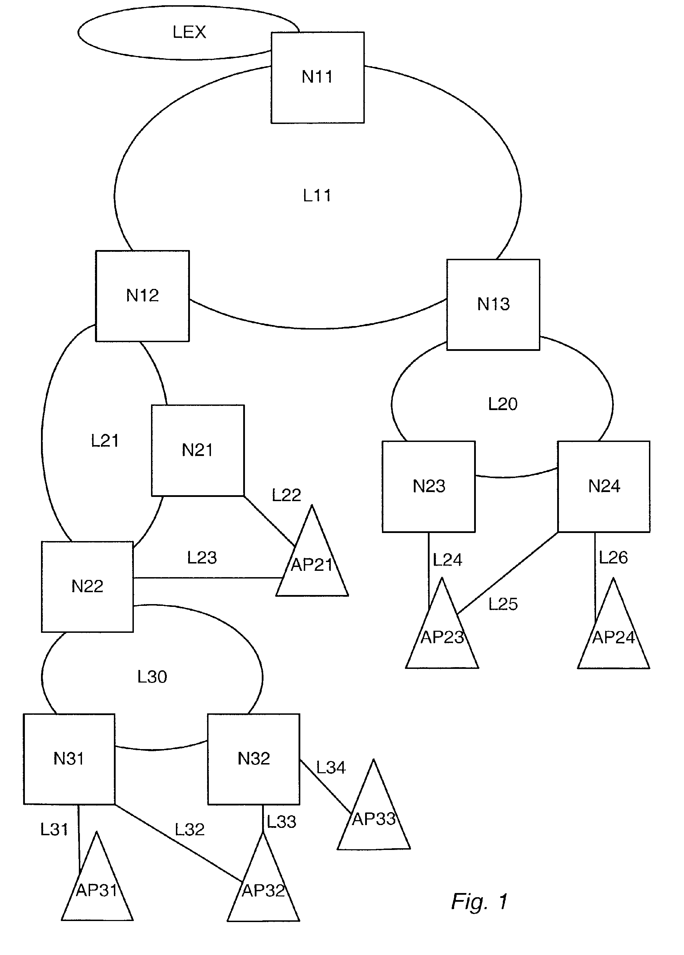

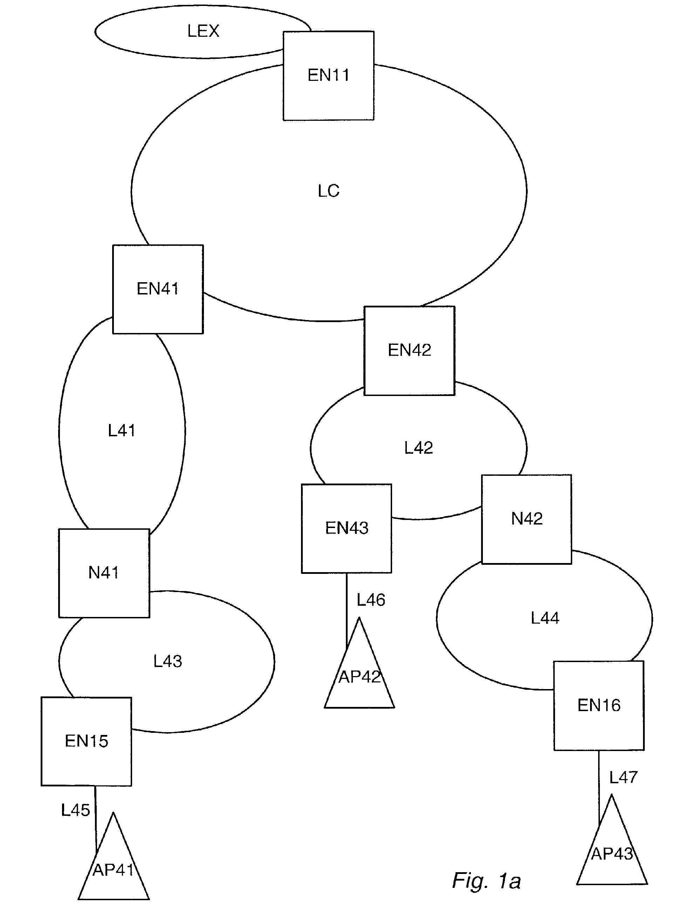

Figure 1 depicts a telecommunication system as invented. The system comprises four communication structures L11, L21, L20, and L30. In the depicted embodiment, the communication structures L11, L21, L20, and L30 are optical fibre rings.

The first communication structure L11 connects the edge nodes N11, N12, and N13. The first edge node N11 is connected to a further telecommunication system via a communication link LEX. Examples for such further telecommunication systems are a public switched telephony system, a computer network, or a private network.

The second edge node N12 is connected by the communication link L21 to two nodes N22 and N21. The nodes N21 and N22 are connected to the access point AP21 by the communication link L22 and L23, respectively.

The node N22 is connected to two further nodes N31 and N32 via the communication structure L30. Node N31 is connected by a communication link L31 to an access point AP31 and by a communication link L32 to an access point AP32.

Node N32 is connected by a communication link L33 to an access point AP32 and by a communication link L34 to an access point AP33.

The third edge node N13 is connected via a communication structure L20 to the node N23 and the edge node N24. The node N23 is connected to an access point AP23 by a communication link L24. The edge node N24 is connected to the access point AP23 by a communication link L25 and to an access point AP24 by a communication link L26.

The hierarchy of the telecommunications system is defined as follows, on the highest level is the communication structure L11; on the next highest level are the communication structures L20, L21 and L30. The communication links L22, L23 L24, L25, L26, L31, L32, L33, and L34.are on the third level.

In the hierarchy as defined above, for the edge node N12, the communication structure L21 is lower in the hierarchy than the communication structure L11. For node N31, the communication links L31 and L32 are on the same level that is below the level of the communication link L30.

When a subscriber attaches to the system, an authentication may be performed. The subscriber sends authentication information to an authentication instance of the system. Such authentication information is not subject of the invention and may be any authentication information, known to a person skilled in the art. Known ways of authenticating are described for example for GSM or UMTS systems. Authentication instances can be for example an authentication centre of a GSM network, or an AAA server (Authentication, Authorisation and Accounting server).

In a first embodiment of the invention, the system returns after a successful authentication an identification of communication resources assigned to the subscriber. The allocation of resources to a subscriber can be stored for example in the authentication instance. The identification of communication resources is stored in the terminal. In a second embodiment of the invention, such identification is already stored in the terminal of the subscriber, for example on a SIM (Subscriber Identity Module) or a WIM (Wireless Identification Module).

In an embodiment of the invention, a subscriber sends a further identification of himself, for example an IP (Internet Protocol) address, to the system. The IP address may be used in an access point for determining payload sent to the subscriber. If the identification of the subscriber is not based on his IP address, and the subscriber is in an IP session with another party, the IP protocol is tunnelled between a terminal of the subscriber and his partner in the IP session.

The communication resources assigned to a subscriber are used in the system exclusively for the subscriber, and the payload sent to or by the subscriber will be transmitted on said communication resources, only. The resources are assigned to the subscriber and reserved in the system independent from a current communication of the subscriber. That is, the subscriber keeps his resources whether he uses them or not until they are freed.
Resources can be freed for example at the end of a subscription or when the subscriber detaches from the system.

When the subscriber changes from a first access point AP32 to a second access point AP33, he transmits the identification of the communication resources asssigned to him to the second access point AP33. The first access point AP32 is a wireless LAN (Local Area Network) receiver and the second access point AP33 a bluetooth receiver. The terminal of the subscriber comprises radio interfaces for both access methods.

In a preferred embodiment of the invention, the same resources are used on a first communication link L33 to the first access point AP32 and on a second communication link L35 to the second access point AP33 for transmitting payload for the subscriber. The second access point AP33 then uses the identified communication resources for the transmission of payload originating or terminating at the subscriber. In the case that different resources are used on different levels of the hierarchy, the resources are mapped on the nodes connecting these levels.

In another embodiment of the invention, different resources are used on the communication link L33 to the first access point AP32 and on the communication link L35 to the second access point AP33. In this embodiment, the subscriber sends an identification of communication resources on the communication link L11 that is on the highest level in the hierarchy of the system. The identified communication resources of the communication link L11 are mapped to resources on the communication links L21 and L30, which form a single communication link. The node N32 is connected to the second access point AP33 and identifies the subscriber by its reserved communication resources on the highest communication link L11. The node N32 uses the communication resources on the communication links L30 and L21, that are mapped to the identified communication resources on the highest link L11, for payload transmitted for the subscriber. The node N32 maps the communication resources of the communication link L30 to resources on the communication link L35 towards the access point AP33.

In the system of figure 1, any of the communication structures L11, L20, L21, L22 could have been defined as the highest in the hierarchy, as long as all other communication structures got an appropriate level of hierarchy. An appropriate level can be defined, for example, for any given communication structure by decreasing the level of the given communication structure by one for every communication structure between the given communication structure and the communication structure that is highest in the hierarchy. Two neighbouring communication structures with the same level of hierarchy are seen as a single communication structure with a non-ring topology.

Apart from the architecture of figure 1, three further architectures are described.

In the first architecture, the network comprises no edge nodes. The system without edge nodes does not comprise a hierarchy. In such system, each communication structure transmits all payload that are sent in the system. In a preferred implementation of the embodiment, the access points transmit only payload that are addressed to terminals in their service area on a downlink direction, i.e. from the system to terminals,. In an uplink direction, i.e. from terminal to the system, the access points broadcast all packets they receive. For the handling of payload that are originating and terminating in the service area of the same access point, two alternative ways of handling payload are possible. The first way is to handle the payload within the access point, the second is to broadcast at least a copy of the payload to the system.

In the second architecture, only nodes that are connected to an access point are implemented as edge nodes. Furthermore, all communication links between edge nodes and said access points are defined as lowest level in a hierarchy. In such architecture, all other communication links are of the same level in the hierarchy and by that form one communication structure. In this architecture, the access points do not perform any filtering and forward all payload they receive in the uplink or the downlink direction.

In a preferred third architecture, a central communication structure is defined that is highest in the hierarchy of the telecommunications system. At least one of the nodes in the central communication structure is an edge node. This architecture is described by Figure 1a in more detail.

Figure 1a depicts a preferred embodiment of the telecommunications system. In said system, only nodes that are connected either to an access point or to a central communication structure are edge nodes. By this, the system comprises a central communication structure LC that connects three edge nodes EN11, EN41, and EN42. The edge node EN11 is connected to an external network LEX. The edge node EN41 is connected to a node N41 via a communication link L41. The node N41 is connected to an edge node EN15 via a communication link L43. The edge node EN15 is connected via a communication link L45 to an access point AP41.

The edge node EN42 is connected to a node N42 and an edge node EN43 by a communication link L42. The edge node EN43 is connected to an access point AP42 by a communication link L46. The node N42 is connected to an edge node EN16 by a communication link L44. The edge node EN16 is connected to an access point AP43 by a communication link L47.

The nodes N41, N42 duplicate traffic they receive on a first communication link and send it on the first and a further communication link they are connected to. For example receives the node N41 a payload received on the communication link L41. The node N41 duplicates the payload and sends it on the communication links L41 and L43. If the node N41 receives a payload on the communication link L43, it duplicates it and sends it on both communication links L43 and L41. By this every payload received by the node N41 is broadcasted on its links. Thus, the communication links L41 and L43 are on the same level in a hierarchy of the telecommunication system. The same applies to the node N42 and its communication links L42 and L44. The communication links L41 and L43 can be seen as a single communication structure with a non-ring topology.

The hierarchy of the telecommunications system is as follows, on the highest level is the central communication structure LC. The communication links L41, L42, L43, and L44 share the same level. On the lowest level are the links to access points L45, L46, and L47.

In another implementation of the preferred embodiment of the invention, only nodes connected to the central communication structure are implemented as edge nodes EN11, EN41, EN42. In this implementation the access points transmit only that payload in a downlink direction that is terminating in a terminal in their respective service area.

Figure 2 depicts a communication structure L11 of the system as described by figure 1. The communication structure L11 connects three nodes N11, N12, N13 with each other. The connections are established by communication resources TS1, TS2, TS3, TS4, to TSn-1, TSn. These resources are means on the communication link L11 that are available for transmitting data.

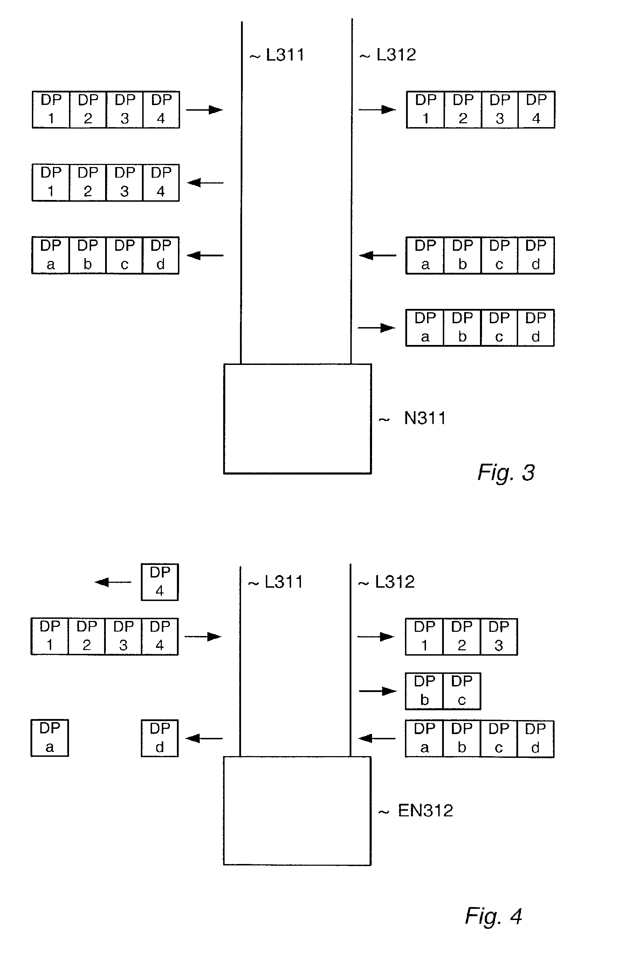

Figure 3 depicts the handling of data packets DP1, DP2, DP3, DP4, DPa, DPb, DPc, DPd received on a first L311 or a second L312 communication link by a node N311. The node receives the data packets DP1, DP2, DP3, DP4 on a first link L311, duplicates them and sends them on the second communication link L312. It receives the transmission resources DPa, DPb, DPc, DPd on a second link 312, duplicates them and sends them on the first communication link L311. In the depicted embodiment, the node N311 performs a one to one mirroring of communication resources between the communication links. That is, the node N311 receives data packets in communication resources of one of the communication links and sends them in the same communication resources of the respective other communication link. In the embodiment, the node N311 performs no check of received contents of the transmission resources.

Figure 4 depicts the handling of data packets DP1, DP2, DP3, DP4, DPa, DPb, DPc, DPd of a first L311 and a second L312 communication link by an edge node N312. To make the different handling more obvious, the edge node EN312 is connected to the same communication links L311, L312 and receives the same data packets as the node N311 of figure 3. The first communication link L311 is lower in a hierarchy of a telecommunications system than the second link L312.

The edge node EN312 allocates only those communication resources of the first communication link L311 to communication resources of the second communication link L312, that belong to terminals in the service area of the edge node EN312.

The edge node EN312 stores an identification of terminals in its service area. The edge node EN312 receives a data packet DP1, DP2, DP3, DP4 on a first communication link L311. Afterwards it checks whether the packet is addressed to a terminal in its service area. If so, the edge node EN312 sends the data packet DP1, DP2, DP3 in a transmission resource of the second communication link L312 that belongs to the addressee. If not, the edge node EN312 sends the data packet DP4 on the first communication link L311.

In opposite direction, the edge node EN312 also receives data packets DPa, DPb, DPc, DPd. It checks, whether the data packets are addressed to terminals in its service area. If the receiver of the data packets DPa, DPb is not in the service area of the edge node, it sends the data packets on the first communication link L311. If the data packets DPb, DPc are addressed to a terminal in the service area of the edge node, the edge node EN312 sends it on the second communication link L312.

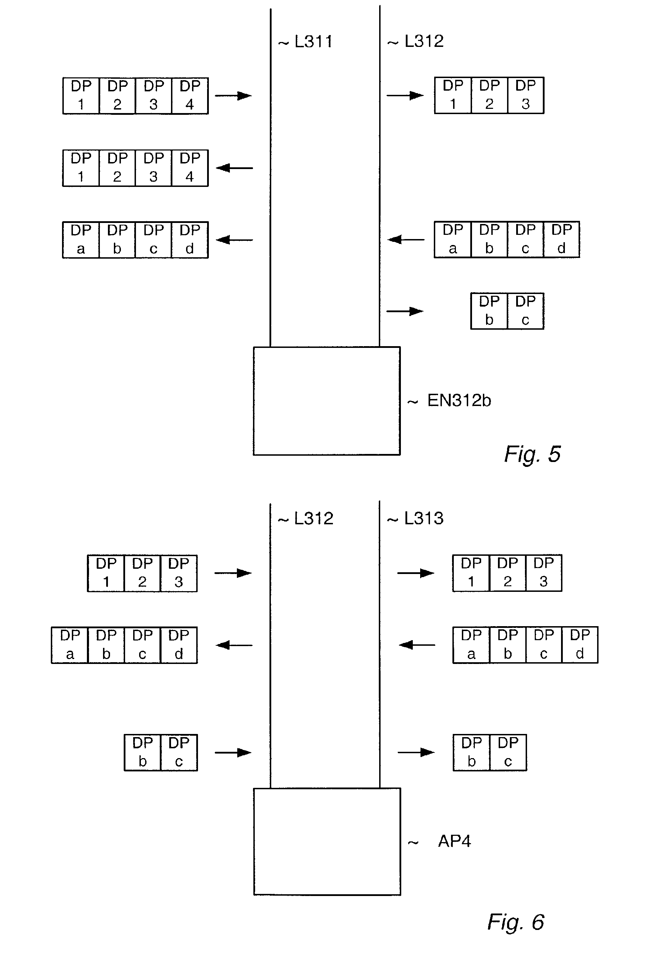

Figure 5 depicts an alternative embodiment of an edge node. The edge node EN312b always sends, at least a copy of, each data packet DP1, DP2, DP3, DP4, DPa, Dpb, DPc, DPd it receives on the first communication link L311, independent from sending it on the second communication link L312, and independent from the communication link L311, L312 on which the data packet was received. Only, the sending of a data packet on the second communication link L312 depends in this embodiment on whether a data packet DP1, DP2, DP3, DP4, DPa, DPb, DPc, DPd is addressed to a terminal in the service area of the edge node EN312. The data packets DP1, DP2, Dp3, DPb, and DPc are addressed to a terminal in the service area and because of that sent on the second communication link L312. The other data packets DP4, DPa, DPd are sent on the first communication link L311, only.

Figure 6 depicts an embodiment of an access point AP4. The access point AP4 is connected to a first communication link L312, which is connected to an edge node. The access point AP4 uses at least one uniform protocol, i.e. a protocol that is used by every access point, towards the system for signaling, and at least one uniform protocol for exchanging payload with the system. The access point AP4 is connected to a further communication link L313 in downlink direction. The communication link L313 leads to a terminal, either directly or via a further network. The communication link L313 between the access point and the terminal can be implemented as for example an infra red link, a radio link or a wire. At least one protocol, used on this link, is terminated in the access point AP4, if it is not the at least one protocol, used between the access point AP4 and the system. The depicted access point AP4 does not perform any filtering, as this is performed by an edge node, the access point AP4 is connected to.
The access point AP4 receives the data packets DP1, DP2, DP3 from the edge node. These packets are sent in the downlink direction towards the terminal. The access point AP4 receives the data packets DPa, DPb, DPc, DPd from the terminal and sends them in an uplink direction to the edge node. The edge node returns the data packet DPb, as it is addressed to a terminal in the service area of the access point AP4. The access point sends the data packet DPb to the addressed terminal on the second communication link L313. In an alternative embodiment of an access point, the access point AP4 sends the data packet DPb after reception to the addressed terminal. Depending on the implementation, either the access point sends a copy of the data packet DPb to the edge node or not. Sending the packet has the advantage that every data packet sent in the system is available at at least one of the nodes of a central information structure. Not sending the packet reduces the number of tasks of an access point. The sending or not sending may depend on operator settings.

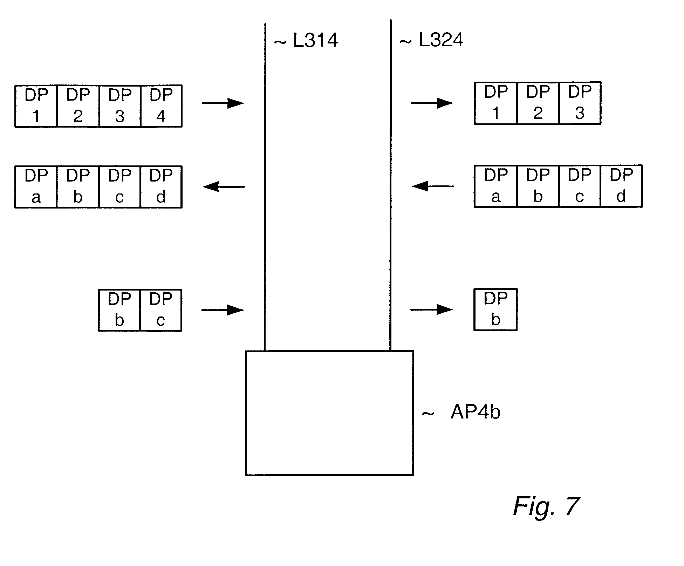

Figure 7 depicts another embodiment of an access point AP4b that performs filtering of data packets in a downlink direction. The access point AN4b is connected to a node via a first communication link L314. A second communication link L324 leads from the access point AP4b to terminals. The access point AP4b receives data packets DP1, DP2, DP3, DP4 on the first communication link. It sends the data packets DP1, DP2, DP3 that are addressed to a terminal in the service area of the access point AP4b on the second communication link. In an alternative embodiment of the invention, the access point AP4b may return the data packet DP4 that is not addressed to a terminal in the service area of the access point AP4b.

The invention further relates to software that controls one of an edge node, a node and an access point, in a way that it executes the handling of data packets as described in the figures or embodiments.

The invention also relates to an edge node, a node and an access point, handling data packets as described.

## Claims

1. Telecommunications system, comprising at least one node (N21, N22, N23, N31, N32) that is connected to at least two communication links (L11, L20, L21, L22, L23, L24, L25, L26, L30, L31, L32, L33, L34), and at least one access point (AP21, AP23, AP24, AP31, AP32, AP33), wherein the communication links comprise communication resources for communication between nodes and between nodes and access points,
**characterised, by** that
the communication resources are assigned to subscribers.

2. System, according to claim 1, wherein a correlation of communication resources to subscribers is stored in an authentication instance of the system.

3. System, according to any of the preceding claims, wherein an identification of a communication resource assigned to a subscriber is stored in a terminal of said subscriber.

4. System, according to any of the preceding claims, wherein a hierarchy is defined for communication links.

5. System, according to any of the preceding claims, wherein a communication resource assigned to a subscriber is a communication resource on the communication link on the highest level of the hierarchy of the telecommunication system.

6. System, according to any of the preceding claims, wherein the at least one node allocates a communication resource on first a communication link to a communication resource on a second communication link.

7. System, according to claim 6, wherein the allocating is a one to one mirroring.

8. System, according to any of the preceding claims, wherein at least one of the nodes is an edge node(N11, N12, N13, N24) being connected to at least two communication links that are on different levels of a hierarchy of the telecommunication system, wherein the edge node stores an identification of terminals in its service area and exclusively allocates communication resources reserved for terminals in its service area.

9. System, according to any of the preceding claims, comprising a plurality of access points which connect terminals to nodes, wherein each of the access points uses at least one uniform protocol for signalling towards the nodes.

10. System, according to any of the preceding claims, comprising a plurality of access points which connect terminals to nodes, wherein each of the access points uses at least one uniform protocol for exchanging payload with the nodes.

11. Method for handling data packets in an edge node that is connected to a first communication link that is higher in a hierarchy of the telecommunications system than a second communication link the edge node is connected to, wherein the method comprises the steps of:
- receiving a data packet on a communication link,
- comparing an address information of the packet with address information stored in an address store, and,
- if the address information matches with a stored address information, forwarding the data packet on a second communication link, or, if the address information does not match with an address information, forwarding the data packet on the first communication link.

12. Edge node, for being connected to at least two communication links with different levels in a hierarchy of a telecommunications system **characterised in that** the edge node is adapted to handle packets according to the method of claim 11.

13. Method for handling data packets in an access point that is connected via a first communication link to a telecommunications system and via a second communication link granting at least one terminal access to the telecommunications system, wherein the method comprises the steps of:
- receiving a data packet on a communication link,
- comparing an address information of the packet with address information stored in an address store, and,
- deciding based on the result of the comparison, whether to send the data packet on the second communication link, and
- deciding, whether to send the data packet on the first communication link, based on the communication link the data packet was received on and based on the decision whether to send the data packet on the second communication link.

14. Method according to claim 13, wherein at least one of the decisions is influenced by operator settings.

15. Access point for a telecommunications system, **characterised in that** the access point is adapted to handle packets according to a method according to one of the claims 13 or 14.

16. Method for handling data packets in a node that is adapted to being connected to a least two communication links, the method comprising the steps of:
- receiving a data packet on a communication link,
- duplicating the packet, and
- sending the data packet on a all communication links the node is connected to.

17. Network node for being connected to at least two communication links, **characterised in that** the node is adapted to handle packets according to the method of claim 16.

18. Terminal for communication via a system according to claim 3, comprising a storage module for storing an identification of communication resources assigned to a subscriber.

19. Software that is adapted to control an edge node in a way that the edge node executes a method according to claim 11.

20. Software that is adapted to control an access point in a way that the access point executes a method according to claim 13 or 14.

21. Software that is adapted to control a node in a way that the node executes a method according to claim 16.
